# EUROPÄISCHE PATENTSCHRIFT

(11) **EP 2 324 998 B1**
(45) Veröffentlichungstag und Bekanntmachung des Hinweises auf die Patenterteilung: **09.05.2012**
(21) Anmeldenummer: 10014538.2
(22) Anmeldetag: 12.11.2010
(51) Int. Cl.: B31B 1/74, B31B 1/98, G01B 11/25, G01B 11/30

(54) **Verfahren zur Qualitätsprüfung von Faltschachteln während ihrer Herstellung**
Method for inspecting the quality of folding boxes during their production
Procédé de contrôle de la qualité de boîtes pliantes lors de leur fabrication

(30) Priorität: 18.11.2009 DE 102009053561
(43) Veröffentlichungstag der Anmeldung: 25.05.2011
(73) Patentinhaber: Mondi AG, 1032 Wien (AT)
(72) Erfinder: Gmelin, Elmar, 74076 Heilbronn (DE); Rupp, Alexander, 74214 Bieringen (DE)
(74) Vertreter: Schneider, Andreas

(56) Entgegenhaltungen:
- EP-A2- 0 892 264
- WO-A1-2009/041167
- US-A- 4 389 971
- US-A- 5 978 499

## Beschreibung

Die vorliegende Erfindung betrifft ein Verfahren und eine Vorrichtung zur Qualitätsprüfung von Faltschachteln während ihrer Herstellung. Darüber hinaus betrifft die Erfindung die Verwendung einer solchen Vorrichtung bei einer Faltschachtelklebemaschine sowie eine derartige Faltschachtelklebemaschine. Ferner betrifft die Erfindung ein Computerprogramm zur Verwendung bei einer Faltschachtelklebemaschine.

Aus dem Stand der Technik sind Faltschachtelklebemaschinen zur Herstellung von Faltschachteln aus zuschnitten bekannt. Siehe z.B. EP 2 213 449 Derartige Maschinen umfassen zumeist eine Falt- und eine Klebestation zum Falten und Kleben der Zuschnitte (Nutzen), wobei die Zuschnitte bedruckt sein können und auch mit Handgriffen, Sichtlöchern oder dergleichen versehen sein können, die zuvor mit Hilfe von Stanzeinheiten in die Zuschnitte eingebracht wurden.

Die Zuschnitte weisen Boden-, Deckel- und Seitenklappen auf, wobei in einer dem Fachmann bekannten Art und weise Schlitze vorgesehen sind in der Art, daß an der Klebestation mit einem Klebstoff versehene Faltklappen an der Faltstation derart gefaltet werden, so daß die Faltklappen in einem sich überlappenden Bereich miteinander verkleben. Die so fertiggeklebten und flachgelegten Faltschachteln werden an einer Ausrichtestation ausgerichtet und gestapelt, um anschließend maschinell weiterverarbeitet werden zu können.

Bei einer derartigen Herstellung von Faltschachteln können eine Reihe von Fehlern auftreten, welche die Qualität der Faltschachteln beeinträchtigen. So kann es beispielsweise vorkommen, daß die miteinander zu verklebenden Faltklappen in der Faltstation in der falschen Reihenfolge aufeinandergelegt werden. Dies hat zur Folge, daß nicht die vorgesehenen Faltklappen miteinander verklebt werden. Statt dessen erfolgt - bei einer Außenlaschenverklebung - eine Verklebung mit einer vorangehenden oder nachfolgenden Faltschachtel, da sich der Klebstoff an der Außenseite der flachgelegten Faltschachtel befindet oder aber - bei einer Innenlaschenverklebung - die Faltschachtel verklebt innen mit sich selbst. Nach dem Stapeln der Faltschachteln ist es dann nicht mehr möglich, einen derartigen Verklappungsfehler zu erkennen. Bei der Weiterverarbeitung der Faltschachteln, insbesondere bei deren Befüllung, kommt es in der Folge zu einer Störung der Verpackungsmaschine.

Unabhängig von dem beschriebenen Verklappungsfehler kann es vorkommen, daß durch ein fehlerhaftes, beispielsweise versetztes Stanzen der Zuschnitte und/oder ein fehlerhaftes, insbesondere schiefes Falten der Zuschnitte die gesamte Schachtel in sich verschoben ist. Eine Schachtel mit einem hieraus resultierenden Schiefklebungsfehler kann an der Ausrichtestation nicht mehr ausgerichtet werden. Die schiefe Schachtel wird gemeinsam mit einer Anzahl weiterer Faltschachteln gestapelt und verursacht bei der anschließenden Weiterverarbeitung ebenfalls Probleme.

Aus dem Stand der Technik ist eine Vielzahl verschiedener Test- und Prüfverfahren zur Qualitätsprüfung von Faltschachteln während ihrer Herstellung bekannt. Häufig wird dabei die Breite des Schlitzes ("gap") zwischen den Laschen im Anschluß an die Verklebung ermittelt, um hieraus Informationen über die Genauigkeit der Faltung zu erhalten, beispielsweise zur Bestimmung des sogenannten "fish-tailing"-Fehlers.

Es hat sich jedoch gezeigt, daß aus einer Information über die Breite des Schlitzes keine eindeutige Aussage über die Qualität des Faltkartons ermittelt werden kann, und zwar weder hinsichtlich der Verklappung der zu verklebenden Faltklappen, noch hinsichtlich der Frage der Schiefklebung.

Eine Aufgabe der vorliegenden Erfindung ist es, mit vergleichsweise einfachen Mitteln eine hochgenaue Qualitätsprüfung von Faltschachteln während ihrer Herstellung zu ermöglichen, insbesondere Schiefklebungs- und Verklappungsfehler zu erkennen.

Diese Aufgabe wird durch ein Verfahren nach Anspruch 1 bzw. durch die Gegenstände der weiteren unabhängigen Ansprüche gelöst.

Die im Folgenden im Zusammenhang mit dem Verfahren erläuterten Vorteile und Ausgestaltungen gelten sinngemäß auch für die erfindungsgemäße Vorrichtung und umgekehrt.

Das erfindungsgemäße Verfahren zeichnet sich durch die Kombination zweier Prüfschritte aus, nämlich einerseits ein Überprüfen der richtigen Reihenfolge des Aufeinanderlegens von Faltklappen durch Kontrollieren der Existenz einer Klebekante einer flachgelegten Faltschachtel in einem vorgegebenen Soll-Bereich im Anschluß an ein Verkleben der Faltklappen und andererseits ein Überprüfen der richtigen Faltung der fertiggeklebten und flachgelegten Faltschachtel durch Erkennen von Oberflächenunebenheiten wenigstens einer Seitenfläche eines Faltschachtelstapels im Anschluß an ein Ausrichten und Stapeln der Faltschachteln.

Der Erfindung liegt die Erkenntnis zugrunde, daß Schiefklebungs- und Verklappungsmessung nicht an ein und derselben Stelle der Verarbeitungslinie durchgeführt werden können. Aus diesem Grund wird ein zweistufiges Prüfsystem vorgeschlagen, das eine Kombination zweier Einzelmessungen umfaßt.

Durch die beschriebene Kombination der Schiefklebungs- und Verklappungsprüfung wird sichergestellt, daß schiefe Faltschachteln nicht mehr unerkannt in dem Faltschachtelstapel verbleiben, welcher die Faltschachtelklebemaschine verläßt. Bei nur einem einzigen fehlerhaften Faltkarton wird vorzugsweise der gesamte Stapel ausgeschleust. Gleiches gilt, sofern sich in dem Stapel eine Faltschachtel mit einem Verklappungsfehler befindet. Damit wird sichergestellt, daß die Pakete, welche die Verarbeitungslinie verlassen, ausschließlich qualitativ hochwertige, fehlerfreie Faltkartons umfassen.

Mit der vorliegenden Erfindung können mit anderen Worten mangelhafte Innen- und Außenverklebungen genauso wie schief verklebte Faltschachteln erkannt werden. Hierzu ist es nicht erforderlich, Schlitzbreiten aufwendig zu erfassen. Durch das frühzeitige Erkennen und Bewerten der aktuellen Ausschußquote kann sehr zeitnah in die laufende Produktion eingegriffen werden, um weiteren Ausschuß rechtzeitig zu verhindern, wodurch die internen Produktionskosten verringert werden. Neben der eindeutigen Markierung und Ausschleusung von fehlerhafter Ware ist eine präzise Auswertung und Statistik möglich.

Vorteilhafte Ausführungen der Erfindung sind in den Unteransprüche angegeben und werden im Zusammenhang mit einem Ausführungsbeispiel der Erfindung nachfolgend anhand der Zeichnungen näher erläutert. Hierbei zeigen:

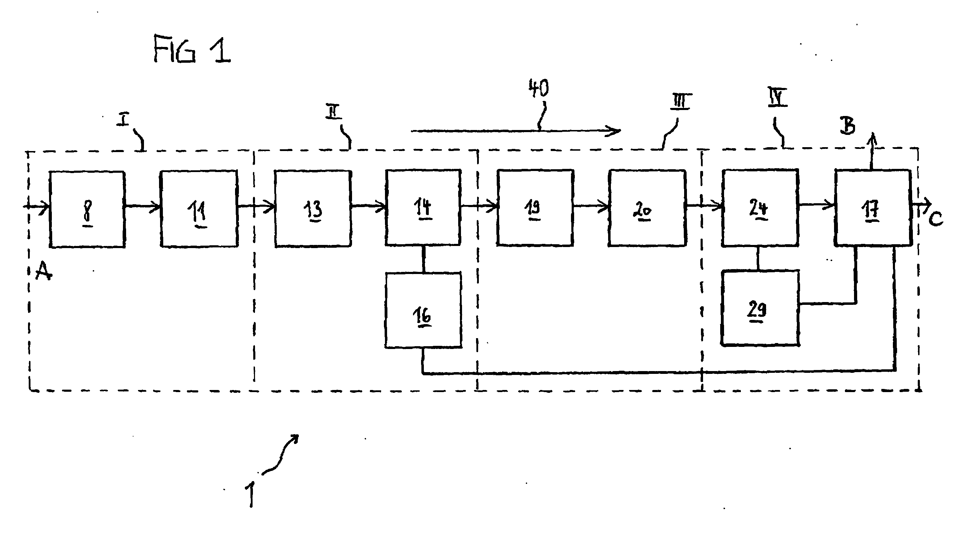

- Fig. 1: eine Faltschachtelklebemaschine,
- Fig. 2: einen Zuschnitt in ungefalteter Form,
- Fig. 3: einen gefalteter Karton ohne Verklappungsfehler,
- Fig. 4: einen gefalteter Karton mit Verklappungsfehler,
- Fig. 5: die Anordnung der Kamera bei der Verklappungsprisfung,
- Fig. 6: die Anordnung des Laserscanners bei der Schiefklebungsprüfung,
- Fig. 7: eine Ansicht eines Stapels mit Laserprojektion,
- Fig. 8: ein 3D-Abbild der Oberfläche einer Stapelseite,
- Fig. 9: eine Meßdatendarstellung bei der Schiefklebungsprüfung.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

Die Erfindung wird anhand einer beispielhaften Faltschachtelklebemaschine 1 beschrieben, der Zuschnitte 2 zugeführt werden. Die Faltschachtelklebemaschine 1 umfaßt dabei eine Reihe von Funktionsabschnitten I, II, III, IV, mit jeweils einer oder mehreren Stationen, die nacheinander angeordnet sind und eine verarbeitungslinie bilden, durch die hindurch die Zuschnitte 2 bzw. die daraus hergestellten Faltschachteln 3 in Prozeßrichtung 40 transportiert werden.

Die der Maschine zugeführtes Zuschnitte 2 werden in einem vorhergehenden Prozeß hergestellt, in welchem Bogen aus Papier, Pappe oder dergleichen in einer Bogendruckmaschine bedruckt und anschließend mit Hilfe einer Bogenstanzmaschine gestanzt werden, wobei die Zuschnitte 2 vereinzelt und Rilllinien für die späteren Falzungen in die Zuschnitte 2 eingebracht werden.

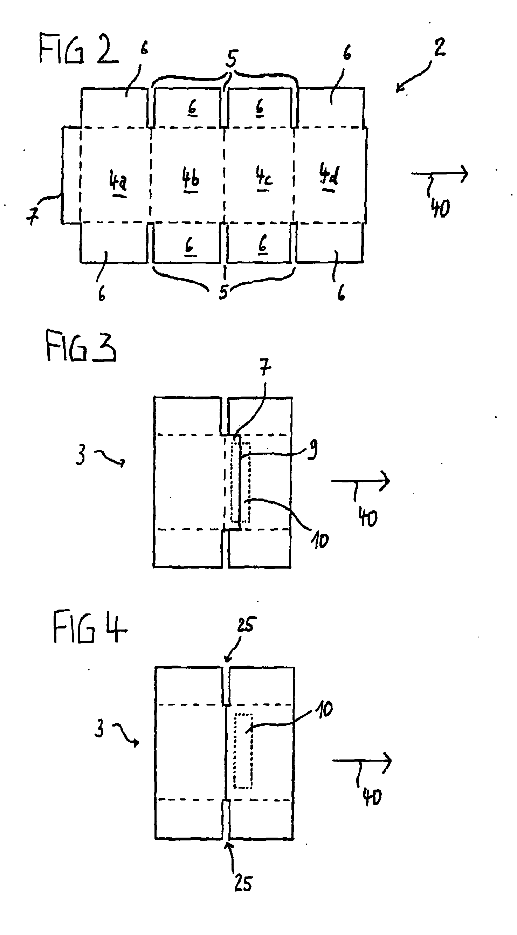

Ein solcherart hergestellter Zuschnitt 2 in ungefalteter Form, wie er der Faltschachtelklebemaschine 1 an Position A zugeführt wird, ist in Fig. 2 abgebildet. Der Zuschnitt 2 besteht dabei aus Karton. Entsprechend wird die herzustellende Faltschachtel nachfolgend als Faltkarton 3 bezeichnet. Andere geeignete Materialien sind beispielsweise Papier, Pappe, Wellpappe usw.

Zwischen den Tafeln 4 des Zuschnittes 2 sind Schlitze 5 eingebracht, die ein Umklappen der Tafeln 4 ermöglichen. Die Tafeln 4 bilden die vier seitlichen wände des Faltkartons 3. Die Laschen 6 verschließen Ober- und Unterseite des Kartons. Eine der Endtafeln 4a weist eine Klebelasche 7 auf, die über den Rand des Zuschnitts 2 herausragt.

Die Oberseite der Klebelasche 7 bzw. die Unterseite derjenigen Tafel 4d, welche der Klebelasche 7 gegenüberliegt, werden in einer in dem ersten Abschnitt I vorgesehenen Klebestation 8 mit Klebstoff versehen, wofür üblicherweise Leimdüsen oder dergleichen verwendet werden. Nach dem Umklappen der beiden Endtafeln 4a, 4d sind diese miteinander verklebt, wie dies in Fig. 3 beispielhaft anhand einer Außenlaschenverklebung dargestellt ist. Die Kante 9 der Klebelasche 7 verläuft dabei durch einen definierbaren, im Beispiel rechteckigen Soll-Bereich 10 auf dem flachgelegten Faltkarton 3.

Erfolgt das Aufeinanderlegen der Faltklappen, hier also der an der Endtafel 4a mit der daran angebrachten Klebelasche 7 einerseits und der gegenüberliegenden Endtafel 4d andererseits, in der verkehrten Reihenfolge, so ergibt sich das in Fig. 4 dargestellte Bild. Die Klebelasche 7 befindet sich unter der zu verklebenden Tafel 4d und in dem definierten Soll-Bereich 10 verläuft keine Klebekante.

Im Anschluß an die Klebestation 8 und die ebenfalls in dem ersten Abschnitt I angeordnete Faltstation 11, in der die Klappen 4 des Zuschnitts 2 mit Hilfe von Balken oder dergleichen gefaltet werden, werden die Faltkartons 3 in einem Transportbereich 13 des darauffolgenden zweiten Abschnitts II der Faltschachtelklebemaschine 1 auf eine Geschwindigkeit beschleunigt, die eine Separation der flachgelegten Faltkartons 3 sicherstellt. Unterhalb der Transportelemente, beispielsweise in Gestalt von angetriebenen Rollen oder Bändern, ist eine erste Prüfeinrichtung 14 angeordnet. Die erste Prüfeinrichtung 14 ist zur Klebekantenerkennung ausgebildet und dient zur Feststellung eines Verklappungsfehlers.

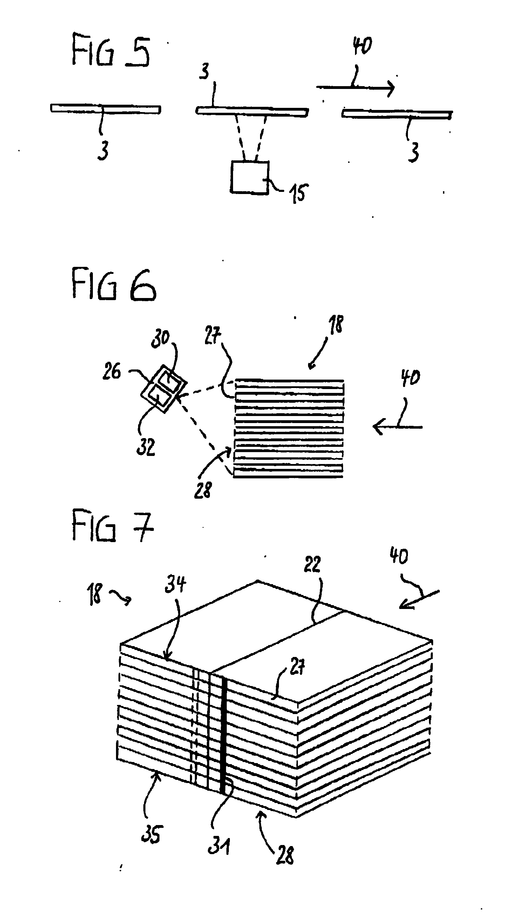

Die vereinzelten flachgelegten Faltkartons 3 laufen dabei mit der Klebekante 9 nach unten über eine Kamera 15 der ersten Prüfeinrichtung 14, vgl. Fig. 5. Bei der Kamera 15 handelt es sich um eine CCD-Farbkamera. Eine Steuereinheit (nicht abgebildet) dient zur Ansteuerung der Kamera 15, zur Bereitstellung einer Benutzerschnittstelle, zum Speichern der negativ bewerteten Auswertungen, beispielsweise auf einer Speicherkarte, sowie zur Bereitstellung einer Kommunikationsschnittstelle, z. B. Ethernet.

Da die Klebekante 9, je nachdem, welche Art von Faltkarton 3 hergestellt wird, an unterschiedlichen Stellen in dem Transportbereich 13 angeordnet ist, ist es erforderlich, die Kamera 15 an die jeweils zu überwachende Stelle zu verfahren. Hierzu ist die Kamera 15 an einer mechanischen Verfahreinheit (nicht abgebildet) montiert, die ebenfalls von der Steuereinheit aus bedienbar ist. Das Positionieren wird mit Hilfe einer elektromotorisch angetriebenen linearen Verstellachse verwirklicht, an der ein Halteprofil zur Aufnahme der Kamera 15 befestigt ist.

Ist die Kamera 15 unterhalb der flachgelegten Faltkartons 3 positioniert, werden die Faltkartons 3 also über die Kamera 15 hinwegbewegt, können Stanzreste und andere Verschmutzungen die Kamera 15 verschmutzen. In diesem Fall ist es von Vorteil, wenn in regelmäßigen Abständen mit Hilfe einer in der Nähe der Kamera 15 angeordneten Düse Druckluft auf die Kamera 15 sowie über eine ggf. erforderliche Beleuchtungseinheit geblasen wird, welche auch größere Mengen von Stanzresten beseitigen.

Die Kamera 15 fertigt von jedem Faltkartons 3, insbesondere von dem Soll-Bereich 10, in dem sich die Klebekante 9 befinden soll, ein Bild an. Hierzu wird die Kamera 15 ausgelöst, sobald ein Karton 3 eine mit der Kamera 15 verbundene Auslöseeinheit, z.B. eine Lichtschranke, passiert. Mit der Auslösung der Messung wird mit sehr kurzer Verschlußzeit ein Bild von der zu messenden Stelle des verklebten Kartons 3 aufgenommen.

In einer an die Kamera 15 angeschlossenen Bildverarbeitungseinheit 16 wird geprüft, ob sich in dem vorgegebenen Soll-Bereich 10 eine Klebekante 9 befindet. Hierzu sucht die Bildverarbeitungseinheit 16 innerhalb der vorgegebenen Grenzen nach der Klebekante 9. Das Meßfenster (Soll-Bereich) und auch die Meßtoleranz kann je nach Produkt, Kartonart und Material individuell eingestellt werden.

Wird eine Klebekante 9 gefunden, so wurde die Klebelasche 7 der Tafel 4a und die Tafel 4d in der richtigen Reihenfolge aufeinandergelegt. Ist dies nicht der Fall, so sendet die Bildverarbeitungseinheit 16 ein entsprechendes Steuersignal an eine am Ende der Verarbeitungslinie angeordnete Ausschleusestation 17 zum späteren Ausschleusen des Faltkartonstapels 18, in dem sich der fehlerhafte Karton 3 befindet. Das falsche Zusammenlegen der Faltklappen wird somit unmittelbar nach dem Zusammenfalten erkannt. In einer Ausführungsform der Erfindung wird durch eine Markiereinheit (nicht abgebildet) gleichzeitig eine Einfärbung des fehlerhaften Kartons 3 veranlaßt. Optional erfolgt eine akustische und/oder optische Signalgebung zur Information des Bedienpersonals.

Mit der Erfindung wird mit anderen Worten eine fehlerfreie Verklebung (Innen- und Außenlaschenverklebung) gewährleistet. Hierzu wird jeder einzelne Karton 3 während der Produktion mit Hilfe einer optischen Prüfeinrichtung 14, 15, 16 begutachtet. Meßbereiche und Toleranzwert können dabei individuell festgelegt werden. Es erfolgt ein permanenter Abgleich der Meßwerte mit den Sollwerten. Verklappungsfehler können durch einen einfachen Erkennungsalgorithmus festgestellt werden.

Über die Prüfung der Existenz der Klebekante 9 in dem Soll-Bereich 10 hinaus ist es ebenfalls möglich, das von der Kamera 15 erhaltene Bild im Hinblick auf weitere Kriterien auszuwerten, so beispielsweise auch im Hinblick auf eine mögliche Schiefklebung. Mit anderen Worten kann neben der Existenz der Klebekante 9 zugleich auch die Position der Kante 9 innerhalb des Soll-Bereiches 10 überprüft werden. Es hat sich jedoch als vorteilhaft herausgestellt, wenn mit der ersten Prüfeinrichtung 14 ausschließlich die Existenz der Klebekante 9 geprüft und damit ein Verklappungstest durchgeführt wird, während der Schiefklebungstest mit einer nachfolgenden zweiten Prüfeinrichtung durchgeführt wird, wie nachfolgend näher erläutert wird.

Im Anschluß an die erste Prüfung werden die vereinzelten Faltkartons 3 in einem weiteren dritten Abschnitt III wieder gesammelt und in Paket- bzw. stapelform ausgerichtet. Nach dem Ausrichten in einer Ausrichtestation 19 werden die fertiggeklebten und flachgelegten Faltkartons 3, beispielsweise in Paketen von 20 bis 25 Stück, in einer Paketbündelstation 20 gebündelt und somit fixiert. Das Fixieren des Stapels 18 erfolgt beispielsweise durch Verschnüren oder das Anbringen einer Banderole 22. Anschließend wird in dem letzten Abschnitt IV der Faltschachtelklebemaschine 1 mit Hilfe einer zweiten Prüfeinrichtung 24 eine Schiefklebungsprüfung durchgeführt.

Um eine Schiefklebung zu erkennen, werden üblicherweise optische Messungen des sich im fertiggeklebten Zustand ergebendes Spaltes 25 zwischen den zu verklebenden Faltklappen 4a, 4d des Kartons durchgeführt. Hierzu müssen die Kartons 3 vereinzelt sein. Da im vorliegenden Fall an derjenigen Stelle der Verarbeitungslinie, an der die Kartons 3 in vereinzelter Form vorliegen, die Kamera 15 der ersten Prüfeinrichtung 14 angeordnet ist, wird der Schiefklebungstest an einer anderen Stelle der Verarbeitungslinie und zu einem späteren Zeitpunkt durchgeführt. Erfindungsgemäß ist die zweite Prüfeinrichtung 24 daher am Ende der Verarbeitungslinie vorgesehen, wobei der zweiten Prüfeinrichtung 24 die geschnürten Stapel 18 zugeführt werden.

Die zweite Prüfeinrichtung 24 dient mit anderen Worten dazu, solche Kartons 3, die durch versetztes Stanzen und/oder schiefes Falten in sich verschoben sind, auch noch im bereits geschnürten Stapel 18 zu erkennen. Schief gefaltete und so verklebte Kartons 3 sind im Stapel 18 durch herausragende Seitenkanten erkennbar. Die zweite Prüfeinrichtung 24 umfaßt daher ein dreidimensionalen Meßsystem in Gestalt eines 3D-Laserscanner 26, mit dessen Hilfe die herausragenden Kanten durch eine Abtastung der Oberfläche 27 einer Stapelseitenfläche 28 erkannt werden. Hierzu wird die Oberfläche 27 wenigstens einer Seitenfläche 28 des ausgerichteten und fixierten Kartonstapels 18 gescannt, wobei ein als Lichtquelle dienender Laser 30 und eine entsprechende Kameraeinheit 32 in einem definierten Winkel schräg zu der Seitenfläche 28 angeordnet sind, vgl. Fig. 6. Anders ausgedrückt wird der Laserscanner 26 in einen bestimmten Winkel zu der zu messenden Fläche 28 positioniert, wobei Laser 30 und Kamera 32 als wesentliche Teile des 3D-Laserscanners 26 in einem gemeinsamen Gehäuse angeordnet sind. Der jeweils optimale Winkel wird in Abhängigkeit von der Meßumgebung und/oder dem verwendeten Maschinentyp bestimmt.

Der Laserscanner 26 wird in unmittelbarer räumlicher Nähe zu der Ausschleusestation 17 an einem Montagerahmen montiert und ist mit einer pneumatisch betreibbaren Verfahreinheit (nicht abgebildet) versehen, durch die sichergestellt wird, daß der Laserscanner 26 in verschiedene Meßpositionen relativ zu dem Faltkartonstapel 18 verfahren werden kann. Für die optimale Ausrichtung des Laserscanners 26 ist der Montagerahmen mit einer Schwenk- und Neigevorrichtung versehen, so daß der Laserscanner 26 im Raum nahezu frei positionierbar ist und somit die Messung sehr unterschiedlicher Faltkartonstapel 18 ermöglicht.

Der Laserscanner 26 führt nach einer Auslösung, die beispielsweise wiederum durch eine Lichtschranke erfolgen kann, sobald sich ein Kartonstapel 18 in der richtigen Position befindet, die Messung durch.

Die meßwertübertragung erfolgt mit Hilfe einer Ethernet-Schnittstelle an einen Steuerrechner mit einer Bildverarbeitungseinheit 29. Die Meß- und Auswertesoftware für den Laserscanner 26 ist dabei vorzugsweise als Softwarepaket in dem Steuerrechner implementiert. Bei der Bildverarbeitungseinheit 29 kann es sich um die Bildverarbeitungseinheit 16 der ersten Prüfeinrichtung 14 oder eine eigenständige Bildverarbeitungseinheit handeln. Die Bildverarbeitungseinheit 29 kann jedoch auch in dem 3D-Laserscanner integriert sein.

Vorzugsweise werden mehrere Messungen an zumindest einer Seitenfläche 28 des Kartonstapels 18 durchgeführt. Es hat sich dabei als vorteilhaft erwiesen, die in Prozeßrichtung 40 weisende Seitenfläche 28 zu vermessen, so daß nach vorn in Prozeßrichtung stehende Ausreißer erfaßt werden. Die Messungen erfolgen dabei an einem ruhenden, mit der Banderole 22 oder dergleichen fixierten, ausgerichteten Stapel 18 fertiggeklebten und flachgelegter Faltkartons 3. Die Laserlinie 31 wird dabei so nahe wie möglich an der Klebekante 9 projiziert, wobei in der in Fig. 7 dargestellten Ausführung die Klebekante 9 etwa in der Mitte der Kartons 3 verläuft, so daß die ebenfalls mittig angeordnete Schnürung 22 in unmittelbarer Nähe der Klebekante 9 verläuft.

In dem abgebildeten Beispiel überprüft der Laserscanner 26 beide Klebelaschen. Hierzu schwenkt der Laserscanner 26 nach einer ersten Messung rechts neben der Klebekante 9 auf die andere Seite der Klebekante 9, um dort die zweite Messung durchzuführen. Die Laserlinie 31 der ersten Messung ist als durchgehende Linie dargestellt, die Laserlinie der zweiten Messung ist mit durchbrochenen Linien angedeutet. Das Fotografieren der auf das gebündelte Paket 18 projizierten Laserlinie 31 erfolgt mit anderen Worten zweimal.

Eine Messung kann dabei aus bis zu 100 Einzelmessungen bestehen. Die Einzelmessungen werden zu einem Bild zusammengefügt. Anschließend werden die begrenzenden Kanten 34, 35 des Stapels 18 gesucht. Die entstehende Fläche 26 innerhalb der begrenzenden Kanten 34, 35 wird auf sogenannte "Ausreißer" hin untersucht. Als "Ausreißer" wird dabei eine Oberflächenunebenheit außerhalb der vorgegebenen Toleranz (z.B. ±2 mm) bezeichnet. Die Toleranzwerte können wiederum individuell angegeben werden.

Im Detail läuft die Überprüfung dabei wie folgt ab: Sowohl bei der ersten Messung rechts neben der Klebekante 9, als auch bei der zweiten Messung links neben der Klebekante 9, wird die tatsächliche Abweichung ermittelt. Ist wenigstens eine der bei diesen Absolutmessungen ermittelten Abweichungen größer als ein zuvor definierter Toleranzwert (bspw. 4 mm), liegt ein fehlerhaftes Produkt vor. Um zu verhindern, daß ein Karton 3 als fehlerfrei bewertet wird, wenn zwar Klebelaschen jeweils für sich gesehen innerhalb der Toleranzgrenzen liegen, sich die Lage der Klebelaschen aber untereinander zu stark unterscheiden, wird in einer besonders vorteilhaften Ausführungsform der Erfindung darüber hinaus die Abweichung der beiden Absolutmessungen voneinander kontrolliert. Übersteigt die Differenz der beiden Absolutmessungen einen zuvor definierten Relativgrenzwert (bspw. 3,0 mm), liegt wiederum ein fehlerhaftes Produkt vor. Wird beispielsweise bei der ersten Messung rechts neben der Klebekante 9 eine Abweichung von 0,1 mm und bei der zweiten Messung links neben der Klebekante eine Abweichung von 3,9 mm ermittelt, so wird der Absolutgrenzwert (4 mm) zwar eingehalten. Der Stapel 18 enthält dennoch wenigstens einen fehlerhaften Karton 3 und wird daher ausgeschleust, da die Differenz der beiden Absolutmessungen (3,8 mm) den Relativgrenzwert (3,0 mm) übersteigt.

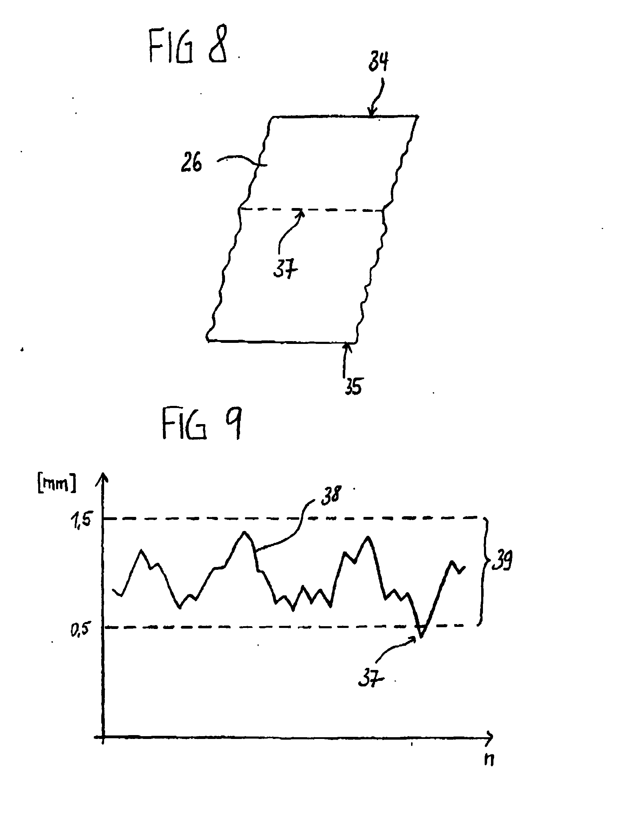

Zum Erkennen einer Schief- bzw. Falschverklebung werden die fertiggeklebten und flachgelegten Faltkartons 3, wie oben beschrieben, in Stapelform vermessen. Anhand eines 3D-Abbildes wird ein Meßbereich definiert. Bei einer Meßdatendarstellung anhand eines Koordinatensystems wird ein Meßkorridor (Toleranzbereich) festgelegt. Das 3D-Abbild, wie es in Fig. 8 beispielhaft in einer vereinfachten Darstellung angegeben ist, gibt mit anderen Worten die Oberflächenunebenheit einer Seitenfläche 28 des Kartonstapels 18 wieder. Ein "Ausreißer" 37 ist angegeben. So ist es möglich, solche Faltkartons 3 als fehlerhaft zu charakterisieren, welche einen Versatz (Abweichung) von beispielsweise mehr als 2 mm aufweisen. In Fig. 9 ist eine entsprechende Darstellung von Meßdaten 38 und Meßkorridor 39 unter Verwendung eines geeigneten Koordinatensystems abgebildet. Wird durch die Bildverarbeitungseinheit 29 ein unzulässige hoher Versatz ("Ausreißer" 37) festgestellt, erhält wiederum die Ausschleusestation 17 ein entsprechendes Signal, wodurch die Ausschleusung des entsprechenden Stapels 18 veranlaßt wird.

Optional wird das Erkennen eines fehlerhaften Produktes dem Bedienpersonal vor Ort mit einem akustischen und/oder optischen Signal angezeigt.

Die Ausschleusestation 17 erhält somit ein Ausschleusesignal entweder von der ersten Prüfeinrichtung 14 bzw. der dazugehörigen Bildverarbeitungseinheit 16 oder aber von der zweiten Prüfeinrichtung 24 bzw. der dazugehörigen Bildverarbeitungseinheit 29. Besonders vorteilhaft ist es, wenn die Prüfeinrichtungen das bestehende Fehlersignal des Leimsystems mitnutzen. Damit ist eine korrekte Wegeverfolgung der Kartons 3 garantiert. Die Prüfeinrichtungen bzw. deren Bildverarbeitungseinheiten übernehmen damit Teile der Funktion einer den Herstellungsprozeß der Faltschachteln 3 kontrollierenden Steuer- oder Regelvorrichtung, die in Abhängigkeit von dem Ergebnis der Bildsignalauswertung eine automatische Ausschleusung der Faltschachteln 3 aus dem Herstellungsprozeß veranlassen. Die Ausschleusestation 17 kann das Ausschleusesignal aber auch über eine separate Steuer- oder Regelvorrichtung erhalten, welche zuvor die Auswertesignale der Prüfeinrichtungen 14, 24 erhalten hat.

Die an Position B der Verarbeitungslinie ausgeschleusten Stapel 18 werden manuell nachkontrolliert. Im Falle eines Verklappungsfehlers ist der entsprechende Faltkarton 3 farbig markiert. Bei einem Schiefklebungsfehler ragt eine Kante des entsprechenden Kartons 3 aus der Seitenfläche 28 des Stapels 18 heraus. Stapel 18 ohne fehlerhafte Kartons 3 werden an der Position C zur weiteren Verwendung ausgegeben.

Zusätzlich kann die beschriebene Prüfvorrichtung mit weiteren Prüfverfahren kombiniert werden, so beispielsweise mit einer herkömmlichen Leimnahtkontrolle, mit der geprüft wird, ob der aufgetragene Klebestreifen die geforderte Qualität aufweist.

Mit Hilfe der vorliegenden Erfindung kann eine 100%ige Qualitätsprüfung von Faltkartons 3 im laufenden Herstellungsprozeß erfolgen. Dabei wird die Einhaltung von zuvor definierten Toleranzwerten überprüft. Mangelhafte Faltkartons werden markiert und aus dem Prozeß ausgeschleust, so daß dem Abnehmer der Faltkartons ein fehlerfreies, qualitativ hochwertiges Produkt garantiert werden kann.

Die erfindungsgemäße Prüfvorrichtung ist ausgebildet zur Durchführung des beschriebenen Verfahrens. Vorzugsweise umfaßt sowohl die erste Prüfeinrichtung 14, als auch die zweite Prüfeinrichtung 24 eine Datenverarbeitungseinheit, ausgebildet zur Durchführung aller Schritte entsprechend des hier beschriebenen Verfahrens, die in einem Zusammenhang mit der Verarbeitung von Daten stehen. Die Datenverarbeitungseinheit, beispielsweise verwirklicht in den Bildverarbeitungseinheiten 16, 29, ist dabei vorzugsweise Teil einer zentralen Steuer- oder Regeleinheit der Faltschachtelklebemaschine 1. Sie weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß dem beschriebenen Verfahren.

Bei den Funktionsmodulen kann es sich um Hardwaremodule oder Softwaremodule handeln. Mit anderen Worten kann die Erfindung, soweit es die Datenverarbeitungseinheit betrifft, entweder in Form von Computerhardware oder in Form von Computersoftware oder in einer Kombination aus Hardware und Software verwirklicht werden.

Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: Faltschachtelklebemaschine
- 2: Zuschnitt
- 3: Faltkarton
- 4: Tafel
- 5: Schlitz
- 6: Lasche
- 7: Klebelasche
- 8: Klebestation
- 9: Klebekante
- 10: soll-Bereich
- 11: Faltstation
- 12: (frei)
- 13: Transportbereich
- 14: erste Prüfeinrichtung
- 15: Kamera
- 16: Bildverarbeitungseinheit
- 17: Ausschleusestation
- 18: Faltkartonstapel
- 19: Ausrichtestation
- 20: Paketbündelstation
- 21: (frei)
- 22: Banderole
- 23: (frei)
- 24: zweite Prüfeinrichtung
- 25: Spalt
- 25: 3d-Laserscanner
- 27: Oberfläche
- 28: Stapelseitenfläche
- 29: Bildverarbeitungseinheit
- 30: Laser
- 31: Laserlinie
- 32: Kamera
- 33: (frei)
- 34: Stapeloberkante
- 35: Stapelunterkante
- 36: Meßfläche
- 37: "Ausreißer"
- 38: Meßdaten
- 39: Toleranzbereich
- 40: Prozeßrichtung

- A: Zuführposition
- B: Ausschleuseposizion fehlerhafter Stapel
- C: Ausgabeposition fehlerfreier Stapel

- I: Funktionsabschnitt "Kleben und Falten"
- II: Funktionsabschnitt "Vereinzelung und verklappungsprüfung"
- III: Funktionsabschnitt "Stapeln und Ausrichten"
- IV: Funktionsabschnitt "Schiefklebeprüfung und Ausschleusung"

## Patentansprüche

1. Verfahren zur Qualitätspritfung von Faltschachteln (3) während ihrer Herstellung, mit den Schritten:
Überprüfen der richtigen Reihenfolge des Aufeinanderlegens von Faltklappen (4, 7) durch Kontrollieren der Existenz einer Klebekante (9) einer flachgelegten Faltschachtel (3) in einem vorgegebenen Soll-Bereich (10) im Anschluß an ein Verkleben der Faltklappen (4, 7) und
Überprüfen der richtigen Faltung der fertiggeklebten und flachgelegten Faltschachtel (3) durch Erkennen von Oberflächenunebenheiten (37) wenigstens einer Seitenfläche (28) eines Faltschachtelstapels (18) im Anschluß an ein Ausrichten und Stapeln der Faltschachteln (3).

2. Verfahren nach Anspruch 1, wobei für das Kontrollieren der Existenz der Klebekante (9) in einem vorgegebenen Soll-Bereich (10) mit Hilfe einer Bildaufnahmeeinrichtung (15) Bildsignale von dem Soll-Bereich (10) erzeugt und an eine Bildsignalauswerteeinrichtung (16) weitergeleitet werden.

3. Verfahren nach Anspruch 1 oder 2, wobei für das Erkennen von Oberflächenunebenheiten (37) wenigstens einer Seitenfläche (28) des Faltschachtelstapels (18) mit Hilfe einer Lichtquelle (26) ein Lichtstreifen (31) auf der wenigstens einen Seitenfläche (28) gebildet und mit Hilfe einer Bildaufnahmeeinrichtung (32) Bildsignale von dem Lichtstreifen (31) erzeugt und an eine Bildsignalauswerteeinrichtung (29) weitergeleitet werden.

4. Verfahren nach Anspruch 2 oder 3, wobei die Bildsignalauswerteeinrichtung (16, 29) mit einer den Herstellungsprozeß der Faltschachtel (3) kontrollierenden Steuer- oder Regelvorrichtung verbunden ist, die in Abhängigkeit von dem Ergebnis der Bildsignalauswertung eine automatische Ausschleusung wenigstens einer Faltschachtel (3) aus dem Herstellungsprozeß veranlaßt.

5. Verfahren nach Anspruch 4, wobei während der automatischen Ausschleusung ein kompletter Faltschachtelstapel (18) aus dem Herstellungsprozeß entfernt wird.

6. Vorrichtung zur Qualitätsprüfung von Faltschachteln (3) während ihrer Herstellung,
mit einer Einrichtung (14) zum Überprüfen der richtigen Reihenfolge des Aufeinanderlegens von Faltklappen (4, 7) durch Kontrollieren der Existenz einer Klebekante (9) einer flachgelegten Faltschachtel (3) in einem vorgegebenen Soll-Bereich (10) im Anschluß an ein verkleben der Faltklappen (4, 7) und
mit einer Einrichtung (24) zum Überprüfung der richtigen Faltung der fertiggeklebten und flachgelegten Faltschachtel (3) durch Erkennen von Oberflächenunebenheiten (37) wenigstens einer Seitenfläche (28) eines Faltschachtelstapels (18) im Anschluß an ein Ausrichten und Stapeln der Faltkartons (3).

7. Verwendung der Vorrichtung nach Anspruch 6 bei einer Faltschachtelklebemaschine (1).

8. Faltschachtelklebemaschine (1) mit einer Vorrichtung nach Anspruch 6.

9. Computerprogramm zur Qualitätsprüfung von Faltschachteln (3) während ihrer Herstellung in einer Paltschachtelklebemaschine (1),
mit Computeranweisungen zum Auswerten von mit Hilfe einer Bildaufnahmeeinrichtung (15) erzeugten Bildsignalen eines vorgegebenen Soll-Bereiches (10) zum Kontrollieren der Existenz der Klebekante (9) einer flachgelegten Faltschachtel (3) in dem Soll-Bereich (10) im Anschluß an ein Verkleben von aufeinandergelegten Faltklappen (4, 7) der Faltschachtel (3), wobei in Abhängigkeit von dem Ergebnis der Bildsignalauswertung eine automatische Ausschleusung wenigstens einer Faltschachtel (3) aus dem Herstellungsprozeß veranlaßt wird und
mit Computeranweisungen zum Auswerten von mit Hilfe einer Bildaufnahmeeinrichtung (32) erzeugten Bildsignalen eines auf wenigstens einer Seitenfläche (28) eines Faltschachtelstapels (18) mit Hilfe einer Lichtquelle (26) gebildeten Lichtstreifens (31) zum Erkennen von Oberflächenunebenheiten (37) der Seitenfläche (28) im Anschluß an ein Ausrichten und Stapeln der Faltschachteln (3), wobei in Abhängigkeit von dem Ergebnis der Bildsignalauswertung eine automatische Ausschleusung wenigstens einer Faltschachtel (3) aus dem Herstellungsprozeß veranlaßt wird,
wenn das Computerprogramm auf einem einzelnen oder mehreren miteinander verbundenen Rechnern ausgeführt wird.

## Claims

1. Method for inspecting the quality of folding boxes (3) during their production, comprising the following steps:
monitoring that folding flaps (4, 7) are placed one on top of the other in the correct order by way of checking for the existence of an adhesive edge (9) of a flat folding box (3) in a pre-specified desired region (10), after the folding flaps (4, 7) have been adhesively bonded, and
monitoring that the completely adhesively bonded, flat folding box (3) is folded correctly by way of detecting surface unevennesses (37) of at least one side face (28) of a folding-box stack (18), after the folding boxes (3) have been aligned and stacked.

2. Method according to Claim 1, wherein, for the step of checking for the existence of the adhesive edge (9) in a pre-specified desired region (10), image signals of the desired region (10) are generated using an image recording device (15) and are transmitted to an image signal evaluation device (16).

3. Method according to Claim 1 or 2, wherein, for the step of detecting surface unevennesses (37) of at least one side face (28) of the folding-box stack (18), a light strip (31) is formed on the at least one side face (28) using a light source (26) and image signals of the light strip (31) are generated using an image recording device (32) and are transmitted to an image signal evaluation device (29).

4. Method according to Claim 2 or 3, wherein the image signal evaluation device (16, 29) is connected to a control or regulating apparatus, which monitors the production process of the folding box (3) and, in dependence on the result of the image signal evaluation, triggers at least one folding box (3) to be automatically rejected from the production process.

5. Method according to Claim 4, wherein, during automatic rejection, a complete folding-box stack (18) is removed from the production process.

6. Apparatus for inspecting the quality of folding boxes (3) during their production,
comprising a device (14) for monitoring that folding flaps (4, 7) are placed one on top of the other in the correct order by way of checking for the existence of an adhesive edge (9) of a flat folding box (3) in a pre-specified desired region (10), after the folding flaps (4, 7) have been adhesively bonded, and
comprising a device (24) for monitoring that the completely adhesively bonded, flat folding box (3) is folded correctly by way of detecting surface unevennesses (37) of at least one side face (28) of a folding-box stack (18), after the folding boxes (3) have been aligned and stacked.

7. Use of the apparatus according to Claim 6 in a folding-box adhesive-bonding machine (1).

8. Folding-box adhesive-bonding machine (1) comprising an apparatus according to Claim 6.

9. Computer program for inspecting the quality of folding boxes (3) during their production in a folding-box adhesive-bonding machine (1),
comprising computer instructions for evaluating image signals of a pre-specified desired region (10), which image signals are generated using an image recording device (15), for checking for the existence of the adhesive edge (9) of a flat folding box (3) in the desired region (10), after folding flaps (4, 7), which have been placed one on top of the other, of the folding box have been adhesively bonded, wherein, in dependence on the result of the image signal evaluation, automatic rejection of at least one folding box (3) from the production process is triggered, and
comprising computer instructions for evaluating image signals, which are generated using an image recording device (32), of a light strip (31), which is formed on at least one side face (28) of a folding-box stack (18) using a light source (26), for detecting surface unevennesses (37) of the side face (28), after the folding boxes (3) have been aligned and stacked, wherein, in dependence on the result of the image signal evaluation, automatic rejection of at least one folding box (3) from the production process is triggered,
when the computer program is executed on a single or on a plurality of interconnected computers.

## Revendications

1. Procédé de contrôle qualité de boîtes pliantes (3) pendant leur fabrication, comprenant les étapes suivantes :
contrôle de l'ordre correct de l'empilement des rabats de pliage (4, 7) en contrôlant l'existence d'une bande adhésive (9) d'une boîte pliante (3) posée à plat dans une zone voulue (10) prédéfinie à la suite d'un collage des rabats de pliage (4, 7) et
contrôle du pliage correct de la boîte pliante (3) complètement collée et posée à plat en détectant les irrégularités de la surface (37) sur au moins une surface latérale (28) d'une pile de boîtes pliantes (18) à la suite d'un alignement et d'un empilement des boîtes pliantes (3).

2. Procédé selon la revendication 1, selon lequel, pour contrôler l'existence de la bande adhésive (9) dans une zone voulue (10) prédéfinie, des signaux d'image de la zone voulue (10) sont générés à l'aide d'un dispositif d'acquisition d'image (15) et transmis à un dispositif d'interprétation de signaux d'image (16).

3. Procédé selon la revendication 1 ou 2, selon lequel, pour détecter des irrégularités de la surface (37) sur au moins une surface latérale (28) de la pile de boîtes pliantes (18), une bande de lumière (31) est formée à l'aide d'une source de lumière (26) sur l'au moins une surface latérale (28) et des signaux d'image de la bande de lumière (31) sont générés à l'aide d'un dispositif d'enregistrement d'image (32) puis transmis à un dispositif d'interprétation de signaux d'image (29).

4. Procédé selon la revendication 2 ou 3, selon lequel le dispositif d'interprétation de signaux d'image (16, 29) est relié avec un dispositif de commande ou de régulation qui contrôle le processus de fabrication des boîtes pliantes (3), lequel provoque une éjection automatique d'au moins une boîte pliante (3) hors du processus de fabrication en fonction du résultat de l'interprétation des signaux d'image.

5. Procédé selon la revendication 4, selon lequel une pile de boîtes pliantes (18) complète est retirée du processus de fabrication pendant l'éjection automatique.

6. Dispositif de contrôle qualité de boîtes pliantes (3) pendant leur fabrication,
comprenant un dispositif (14) pour contrôler l'ordre correct de l'empilement des rabats de pliage (4, 7) en contrôlant l'existence d'une bande adhésive (9) d'une boîte pliante (3) posée à plat dans une zone voulue (10) prédéfinie à la suite d'un collage des rabats de pliage (4, 7) et
comprenant un dispositif (24) pour contrôler le pliage correct de la boîte pliante (3) complètement collée et posée à plat en détectant les irrégularités de la surface (37) sur au moins une surface latérale (28) d'une pile de boîtes pliantes (18) à la suite d'un alignement et d'un empilement des boîtes pliantes (3).

7. Utilisation du dispositif selon la revendication 6 sur une encolleuse de boîtes pliantes (1).

8. Encolleuse de boîtes pliantes (1) équipée d'un dispositif selon la revendication 6.

9. Programme informatique pour le contrôle qualité de boîtes pliantes (3) pendant leur fabrication dans une encolleuse de boîtes pliantes (1),
comprenant des instructions informatiques pour interpréter les signaux d'image d'une zone voulue (10) prédéfinie, générés à l'aide d'un dispositif d'acquisition d'image (15), pour contrôler l'existence de la bande adhésive (9) d'une boîte pliante (3) posée à plat dans la zone voulue (10) à la suite d'un collage des rabats de pliage (4, 7) posés les uns au-dessus des autres de la boîte pliante (3), une éjection automatique d'au moins une boîte pliante (3) hors du processus de fabrication étant provoquée en fonction du résultat de l'interprétation des signaux d'image et comprenant des instructions informatiques pour interpréter les signaux d'image, générés à l'aide d'un dispositif d'enregistrement d'image (32), d'une bande de lumière (31) formée sur une surface latérale (28) d'une pile de boîtes pliantes (18) à l'aide d'une source de lumière (26) afin de détecter les irrégularités de la surface (37) sur la surface latérale (28) à la suite d'un alignement et d'un empilement des boîtes pliantes (3), une éjection automatique d'au moins une boîte pliante (3) hors du processus de fabrication étant provoquée en fonction du résultat de l'interprétation des signaux d'image, lorsque le programme informatique est exécuté sur un ordinateur unique ou sur plusieurs ordinateurs connectés ensemble.
